# EUROPÄISCHE PATENTSCHRIFT

(11) **EP 2 138 444 B1**
(45) Veröffentlichungstag und Bekanntmachung des Hinweises auf die Patenterteilung: **28.09.2011**
(21) Anmeldenummer: 09007316.4
(22) Anmeldetag: 02.06.2009
(51) Int. Cl.: B66F 9/075, B66F 17/00, H01R 13/66, B66F 9/24

(54) **Flurförderzeug**
Industrial truck
Chariot de manutention

(30) Priorität: 26.06.2008 DE 102008030345; 05.12.2008 DE 102008060712
(43) Veröffentlichungstag der Anmeldung: 30.12.2009
(73) Patentinhaber: OM Carrelli Elevatori S.p.A., 20020 Lainate (MI) (IT)
(72) Erfinder: Castagnoli, Fabrizio, 46029 Suzzara (IT); Zanolo, Graziano, 46039 Villimpenta (IT)
(74) Vertreter: Geirhos, Johann

(56) Entgegenhaltungen:
- EP-A- 0 863 522
- DE-A1-102005 004 875
- DE-A1-102006 055 249
- DE-U1-202009 006 960
- FR-A- 2 826 318

## Beschreibung

Die Erfindung betrifft ein Flurförderzeug, insbesondere Lagertechnikgerät, mit einer elektrische Energie liefernden Energieversorgungseinheit, insbesondere einem Batterieblock, und einem elektrischen Antriebssystem, wobei eine Kontaktierungsvorrichtung zur elektrischen Verbindung des Antriebssystems mit der Energieversorgungseinheit vorgesehen ist, die einen feststehenden Steckerteil und einen bewegbaren Steckerteil aufweist, und an der Kontaktierungsvorrichtung eine Notausfunktion ausgebildet ist.

Bei Flurförderzeugen mit einem elektrischen Antriebssystem, insbesondere einem batterie-elektrischen Antriebssystem ist eine von einem Batteriestecker gebildete Kontaktierungsvorrichtung vorgesehen, mit der die Batterie mit den elektrischen und elektronischen Antriebsaggregaten des Antriebssystems, beispielsweise einem Fahrmotor und einem eine Hydraulikpumpe antreibenden Motor, elektrisch verbunden werden kann. Um aus Sicherheitsgründen ein sofortiges Abschalten der Antriebsaggregate zu erzielen, sind derartige Flurförderzeug mit einer Notausfunktion versehen, die in der Regel von einem Notausschalter gebildet wird, der mit einem Schlagknopf betätigbar ist.

Ein derartiger Notausschalter für ein Flurförderzeug ist aus der EP 0 863 522 B1 bekannt. Der Notausschalter umfasst einen Schlagknopf, der an dem Steckerteil des Batteriesteckers angeordnet ist, wobei bei der Betätigung des Schlagknopfes die Verbindung eines Kontaktstiftes des Steckerteils mit einem Motoranschlusskabel unterbrochen wird. Ein derartiger Batteriestecker mit einem von einem Schlagknopf gebildeten Notausschalter weist jedoch einen hohen Bauaufwand auf.

Die DE 10 2005 004 875 A1 offenbart ein als Gegengewichtsgabelstapler ausgebildetes Flurförderzeug mit einer Traktionsbatterie, bei dem eine lösbare elektrische Leitungsverbindung zwischen der Traktionsbatterie und dem Fahrzeug vorgesehen ist. Das fahrzeugseitige Kupplungselement der Leitungsverbindung ist auf einer schwenkbaren Konsole gehaltert, die von einer oberhalb der Traktionsbatterie befindlichen Betriebsposition in eine Wartungsposition verschwenkbar ist, um das fahrzeugseitige Kupplungselement zum Wechsel der Traktionsbatterie außerhalb des Bewegungsbereichs der Traktionsbatterie zu bringen.

Aus der DE 101 29 781 A1 bzw. der FR 2 826 318 A1 ist ein gattungsgemäßes Flurförderzeug mit einer Notausfunktion bekannt, wobei die Notausfunktion durch eine Beaufschlagung des Batteriesteckers in eine Lösestellung erzielt wird. Hierzu ist ein von einer Bedienperson betätigbarer und federvorgespannter Hebel vorgesehen, der um eine horizontale Achse schwenkbar an einem Batteriefachdeckel gelagert ist und mit dem bewegbaren Steckerteil in Wirkverbindung steht. Eine derartige Notausfunktion weist aufgrund des schwenkbaren Hebels ebenfalls einen hohen Bauaufwand auf.

Der vorliegenden Erfindung liegt die Aufgabe zugrunde, ein Flurförderzeug der eingangs genannten Gattung zur Verfügung zu stellen, bei dem die Notausfunktion einen geringen Bauaufwand verursacht und in ergonomischer Weise betätigt werden kann.

Diese Aufgabe wird erfindungsgemäß dadurch gelöst, dass der bewegbare Steckerteil mit einer von einer Bedienperson betätigbaren Betätigungsfläche versehen ist, wobei bei einer Beaufschlagung der Betätigungsfläche mit einer von der Bedienperson ausgeübten Druckkraft der bewegbare Steckerteil in Richtung einer Lösestellung betätigbar ist. Die erfindungsgemäße Notausfunktion wird somit durch ein Trennen der als Batteriestecker ausgebildeten Kontaktierungsvorrichtung erzielt, indem die Bedienperson eine Druckkraft auf die Betätigungsfläche des bewegbaren Steckerteils ausübt. Da für die erfindungsgemäße Notausfunktion lediglich an dem bewegbaren Steckerteil des Batteriesteckers eine entsprechende von der Bedienperson betätigbare Betätigungsfläche erforderlich ist, ergibt sich ein geringer Bauaufwand für die Notausfunktion. Zudem ist die Notausfunktion durch Lösen des Batteriesteckers mittels einer auf dem bewegbaren Steckerteil aufzubringenden Druckkraft und somit durch Drücken des bewegbaren Steckerteils bzw. durch einen Schlag auf den bewegbaren Steckerteil in ergonomischer Weise betätigbar.

Hinsichtlich einer günstigen Ergonomie ergeben sich besondere Vorteile, wenn gemäß einer Ausgestaltungsform der Erfindung die Kontaktierungsvorrichtung an dem

Flurförderzeug derart angeordnet ist, dass die Wirklinie der von der Bedienperson ausgeübten Druckkraft von der Bedienperson weg nach vorne gerichtet ist. Bei einer derartigen Anordnung der Kontaktierungseinrichtung mit einer nach vorne gerichteten Orientierung wird erzielt, dass durch einfaches Ausstrecken des Armes mit der Handfläche der flachen Hand oder der Faust die Druckkraft auf die Betätigungsfläche ausgeübt werden kann, wodurch in besonders ergonomischer Weise der bewegbare Steckerteil des Batteriesteckers für die Notausfunktion in die Lösestellung beaufschlagt werden kann. Zudem ergibt sich hierbei eine vor unbeabsichtigter Betätigung der Notausfunktion geschützte Anordnung der Kontaktierungsvorrichtung.

Die Ergonomie kann weiter verbessert werden, wenn die Kontaktierungsvorrichtung gemäß einer Weiterbildung der Erfindung an dem Flurförderzeug derart angeordnet ist, dass die Wirklinie der von der Bedienperson ausgeübten Druckkraft nach unten geneigt oder nach oben geneigt oder horizontal ist. Bei einer derartigen Anordnung der Kontaktierungseinrichtung mit einer gerade nach vorne, nach schräg vorne unten oder nach schräg vorne oben gerichteten Orientierung wird erzielt, dass je nach Ausbildung des Fahrerarbeitsplatzes und somit je nach Flurförderzeugtyp durch einfaches Ausstrecken des Armes mit der Handfläche der flachen Hand oder der Faust die Druckkraft auf die Betätigungsfläche ausgeübt werden kann. Bei Flurförderzeugen, bei denen die Bedienperson neben dem Flurförderzeug hergeht oder auf einer Standplattform mitfährt, insbesondere deichselgeführten oder lenkerbedienten Flurförderzeugen, ergibt sich bei einer schräg nach unten orientierten Kontaktierungsvorrichtung, die durch eine schräg nach vorne unten orientierte Druckkraft in der Notausfunktion betätigt werden kann, eine günstige Ergonomie. Bei als Sitzgeräten ausgebildeten Flurförderzeugen kann bei einer horizontalen oder schräg nach vorne oben orientierten Kontaktierungsvorrichtungen, die durch eine gerade nach vom oder eine schräg nach vorne oben orientierte Druckkraft in der Notausfunktion betätigt werden kann, eine günstige Ergonomie erzielt werden.

Es ist ebenfalls möglich, gemäß einer bevorzugten Ausgestaltungsform der Erfindung die Kontaktierungsvorrichtung an dem Flurförderzeug derart anzuordnen, dass die Wirklinie der von der Bedienperson ausgeübten Druckkraft vertikal nach unten gerichtet ist. Bei einer derartigen Anordnung der Kontaktierungseinrichtung mit einer nach vertikal unten gerichteten Orientierung wird erzielt, dass durch ein gerades Drücken oder Schlagen nach unten die Druckkraft auf die Betätigungsfläche ausgeübt werden kann, wodurch in einfacher und schneller Weise der bewegbare Steckerteil des Batteriesteckers für die Notausfunktion in die Lösestellung beaufschlagt werden kann.

Besondere Vorteile sind erzielbar, wenn gemäß einer Ausgestaltungsform der Erfindung die Kontaktierungsvorrichtung an der Oberseite eines Batteriefachs des Flurförderzeugs, insbesondere im Bereich eines Batteriefachdeckels, angeordnet ist. Hierdurch kann insbesondere bei als deichselgeführten oder lenkerbedienten Lagertechnikgeräten, beispielsweise Hubwagen oder Kommissionieren, eine gute Erreichbarkeit der Betätigungsfläche und somit eine ergonomische Betätigung der erfindungsgemäßen Notausfunktion erzielt werden.

Sofern hierbei gemäß einer günstigen Weiterbildung der Erfindung die Kontaktierungsvorrichtung zur Bedienperson seitlich versetzt angeordnet ist, wird eine günstige Erreichbarkeit der Kontaktierungsvorrichtung auf einfache Weise erzielt. Bei deichselgeführten oder lenkerbedienten Flurförderzeugen ist in der Regel die Deichsel oder der Lenken mittig zur Bedienperson angeordnet. Durch die seitliche Versetzung der Kontaktierungsvorrichtung wird auf einfache Weise erzielt, dass die Kontaktierungsvorrichtung in Verlängerung eines Armes der Bedienperson angeordnet ist, so dass durch einfaches Ausstrecken des Armes die Kontaktierungsvorrichtung in der Notausfunktion betätigt werden kann.

Hinsichtlich eines geringen Bauaufwandes ergeben sich Vorteile, wenn die Betätigungsfläche an einem mit dem bewegbaren Steckerteil verbundenen Griffelement ausgebildet ist. Ein derartiges Griffelement ist auf einfache Weise herstellbar und kann an dem bewegbaren Steckerteil auf einfache Weise befestigt werden, beispielsweise mittels geeigneter Schraubverbindungen.

Besondere Vorteile sind erzielbar, wenn gemäß einer Weiterbildung der Erfindung an dem Griffelement ein Handgriff ausgebildet ist, bei dessen Betätigung die Kontaktierungsvorrichtung in eine Verbindungsstellung betätigbar ist. Mit einem derartigen an dem Griffelement ausgebildeten Handgriff kann die als Batteriestecker ausgebildete Kontaktierungsvorrichtung auf einfache Weise in eine Verbindungsstellung beaufschlagt werden.

Sofern das Griffelement gemäß einer Ausgestaltungsform der Erfindung in einer an einem Batteriefachdeckel ausgebildeten Ausnehmung angeordnet ist, kann eine gute Zugänglichkeit des Griffelements bei einer geschützten Anordnung erzielt werden.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes Flurförderzeug in einer Seitenansicht,
- Figur 2: eine perspektivische Ansicht des Antriebsteils mit der erfindungsgemäßen in den Batteriestecker integrierten Notausfunktion,
- Figur 3: den erfindungsgemäßen Batteriestecker der Figur 2 bei entferntem Batteriefachdeckel,
- Figur 4: den erfindungsgemäßen Batteriestecker gemäß den Figuren 2 und 3 in einer Lösestellung und
- Figur 5: den Batteriestecker gemäß den Figuren 2 bis 4 in einer Baugruppendarstellung.

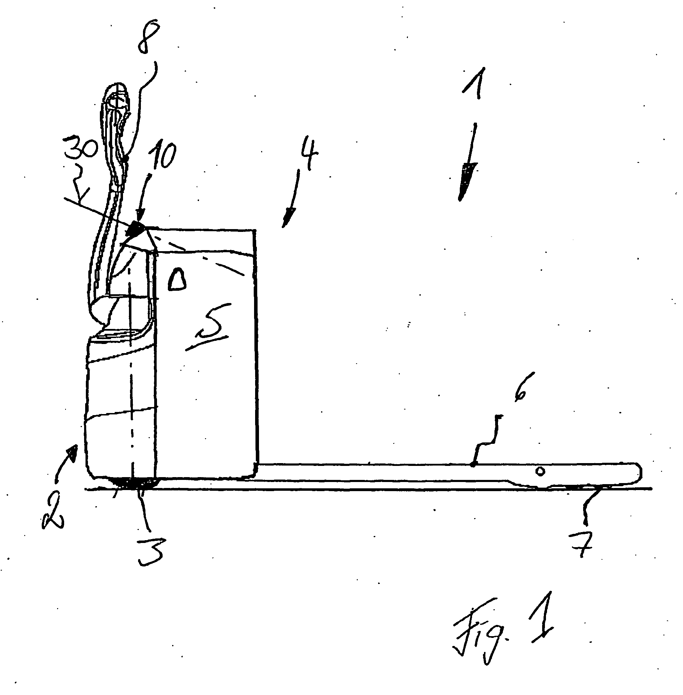

Die Figur 1 zeigt ein erfindungsgemäßes als deichselgeführten Niederhubwagen ausgebildetes Lagertechnikgerät als Beispiel eines Flurförderzeugs 1. Das Flurförderzeug 1 weist einen Antriebsteil 2 mit einem lenkbaren Antriebsrad 3 auf. In Längsrichtung des Hubwagens 1 schließt sich an den Antriebsteil 2 ein Lastteil 4 an, der mit einem benachbart zum Antriebsteil 2 angeordneten Batteriefach 5 versehen ist, in dem eine beispielsweise als Batterieblock ausgebildete Energieversorgungseinheit angeordnet ist. Der Lastteil 4 weist weiterhin in Längsrichtung des Hubwagens 1 benachbart zu dem Batteriefach 5 zwei beabstandete Lastgabeln 6 auf, die sich mittels Lastrollen 7 auf der Fahrbahn abstützen. Der von den Lastgabeln 6 und dem Batteriefach 5 gebildete Lastteil 4 kann hierbei relativ zum Antriebsteil 2 angehoben und abgesenkt werden.

In dem Antriebsteil 2 befinden sich die für den Antrieb des Flurförderzeugs 1 erforderlichen elektrischen und elektronischen Aggregate des elektrischen Antriebssystems, beispielsweise ein mit dem Antriebsrad 3 in Wirkverbindung stehender elektrischer Fahrantriebsmotor, ein elektrischer Pumpenmotor, der eine Hydraulikpumpe zur Versorgung einer hydraulischen Hubvorrichtung antreibt, sowie eine elektronische Steuereinrichtung.

Die Steuerung des Flurförderzeugs 1 durch die Bedienperson erfolgt über eine Lenkdeichsel 8, die am Antriebsteil 1 angeordnet ist. Die Lenkdeichsel 8 ist mit Bedienelementen zur Steuerung des Flurförderzeugs 1 versehen, beispielsweise einem den Fahrantrieb des Flurförderzeugs 1 steuernden Fahrschalter und einen Hubantrieb steuernde Heben- bzw. Senkenschalter, wobei mittels der Hubvorrichtung der Lastteil 4 anhebbar bzw. absenkbar ist. Gelenkt wird der Hubwagen 1, indem die Lenkdeichsel 8 um eine im Wesentlichen vertikale Achse relativ zum Antriebsteil 2 geschwenkt wird. Diese Lenkbewegung die Lenkdeichsel 8 wird mechanisch oder elektrisch auf das Antriebsrad 3 übertragen.

Zur elektrischen Verbindung des in dem Batteriefach 5 angeordneten Batterieblocks mit den im Antriebsteil 2 angeordneten elektrischen und elektronischen Aggregaten ist eine als Batteriestecker ausgebildete Kontaktierungsvorrichtung 10 vorgesehen.

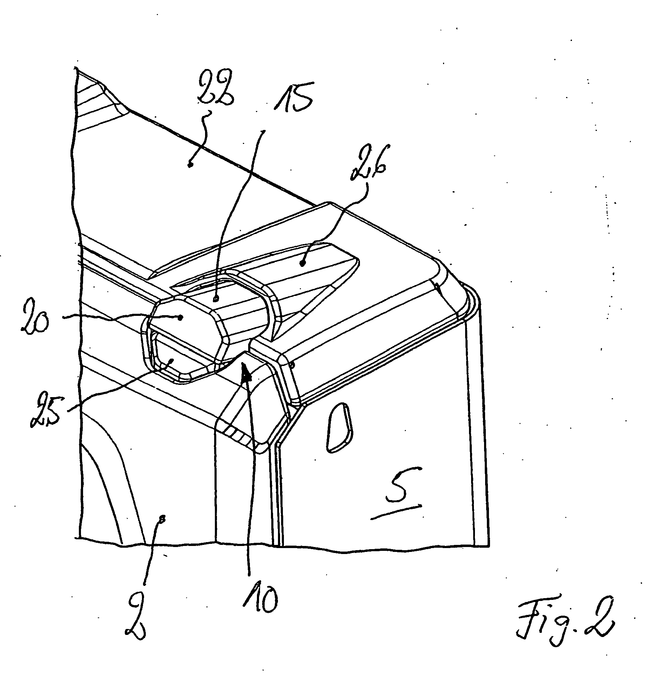

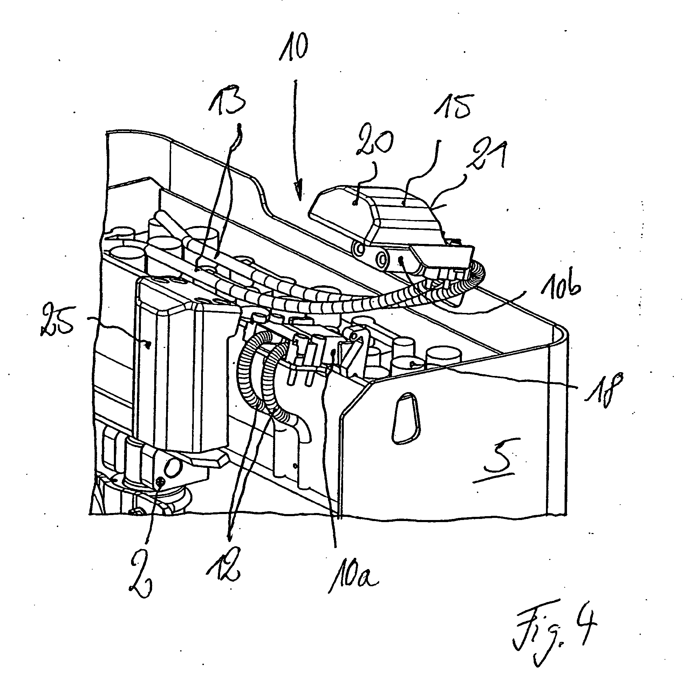

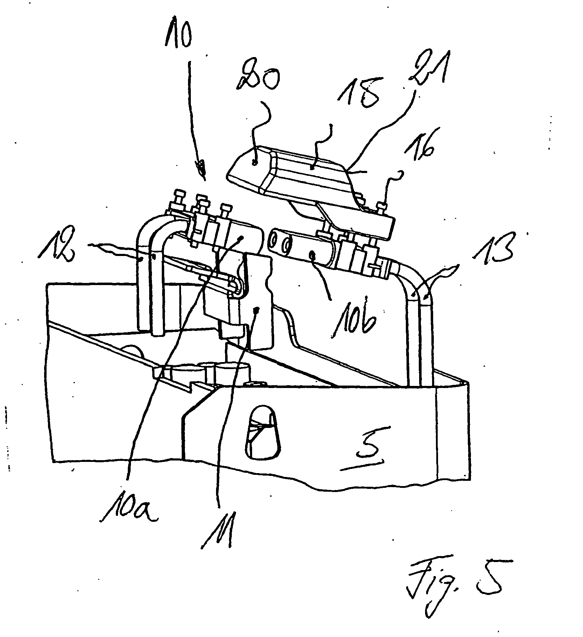

Gemäß den Figuren 2 bis 5 weist die als Batteriestecker ausgebildete Kontaktierungsvorrichtung 10 einen feststehenden Steckerteil 10a auf, der mittels eines Halters 11 an einer vertikalen Rahmenwand des Batteriefachs 5 befestigt ist, und einen relativ zum feststehenden Steckerteil 10a bewegbaren Steckerteil 10b. Der Steckerteil 10a steht hierbei mittels Verbindungskabel 12 mit den elektrischen und elektronischen Aggregaten im Antriebsteil 2 in Verbindung. Der Steckerteil 10b steht mittels Verbindungskabel 13 mit dem Batterieblock 18 in Verbindung. Der Steckerteil 10a ist hierbei als Stecker und der Steckerteil 10b als Dose ausgebildet.

Die als Batteriestecker ausgebildete Kontaktierungsvorrichtung 10 ist hierbei an der Oberseite des Batteriefachs 5 des Flurförderzeugs 1 an der dem Antriebsteil 2 und somit der Bedienperson zugewandten Seite im Bereich eines Batteriefachdeckels 22 angeordnet. Wie aus den Figuren 2 bis 5 ersichtlich ist, ist die Kontaktierungsvorrichtung 10 auf der rechten Seite des Batteriefachdeckels 22 und somit zur Bedienperson seitlich versetzt angeordnet.

Erfindungsgemäß ist an dem bewegbaren Steckerteil 10b ein Griffelement 15 befestigt, beispielsweise mittels entsprechender Befestigungsschrauben 16, das an einer dem Antriebsteil 2 und somit der Bedienperson zugewandten Stirnseite mit einer Betätigungsfläche 20 versehen ist, so dass bei einer Betätigung der Betätigungsfläche 20 mit einer von der Bedienperson ausgeübten Druckkraft der bewegbare Steckerteil 10b von dem feststehenden Steckerteil 10a wegbewegt und somit der bewegbare Steckerteil 10b in eine Lösestellung bewegt werden kann, in dem die elektrische Verbindung von dem Batterieblock 18 zu den elektrischen und elektronischen Aggregaten im Antriebsteil 2 unterbrochen ist und somit eine Notausfunktion erzielbar ist.

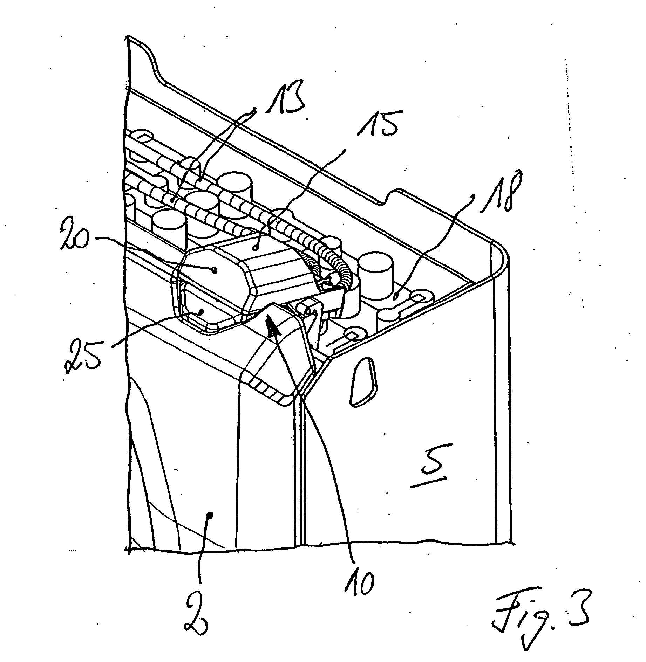

Das Griffelement 15 erstreckt sich hierbei in Längsrichtung des bewegbaren Steckerteils 10b und überdeckt in der Verbindungsstellung der beiden Steckerteile 10a, 10b - wie in der Figur 3 gezeigt ist - den feststehenden Steckerteil 10a. Dadurch wird erzielt, dass die Betätigungsfläche 20 - wie insbesondere aus der Figur 2 ersichtlich ist - in Längsrichtung der Kontaktierungsvorrichtung 10 vor dem feststehenden Steckerteil 10a angeordnet ist und aus dem Antriebsteil 2 bzw. dem Batteriefachdeckel 22 herausragt, so dass eine einfache und sichere Betätigung der Betätigungsfläche 20 durch die Bedienperson in der Notausfunktion ermöglicht wird.

An dem Griffelement 15 ist an der der Betätigungsfläche 20 gegenüberliegenden Stirnseite ein Handgriff 21 ausgebildet, der bei geöffnetem Batteriefachdeckel 22 zugänglich und bei dessen Betätigung der bewegbare Steckerteil 10b mit dem feststehenden Steckerteil 10a in einer Verbindungsstellung kuppelbar ist, um die elektrischen und elektronischen Aggregaten im Antriebsteil 2 mit der in dem Batteriefach angeordneten Batterieblock 18 elektrisch zu verbinden. Das Griffelement 15 kann hierbei an der der Betätigungsfläche 20 gegenüberliegenden Stirnseite hohlgewölbt ausgebildet sein, so dass die Bedienperson mit der Hand in das Griffelement 15 fassen kann und die umfangsseitige Kontur des Griffelements 15 an der Stirnseite den Handgriff 21 bildet. Zudem kann der Handgriff von einer an dem Griffelement 15 ausgebildeten Griffmulde gebildet werden.

An dem feststehenden Steckerteil 10a ist weiterhin eine Abdeckhaube 25 befestigt, die verhindert, dass beim Anheben bzw. Absenken des Lastteils 4 und somit des Batteriefachs 5 relativ zu dem Antriebsteil 2 die Verbindungskabel 12 beschädigt werden. Zudem werden durch die Abdeckhaube 25 beim Anheben und Absenken des Lastteils 4 relativ zum Antriebsteil 2 Scher- und Quetschstellen im Bereich des Griffelements 15 vermieden und somit die sichere Betätigung der Betätigung der Betätigungsfläche 20 in der Notausfunktion in allen Betriebszuständen des Flurförderzeugs 1 sichergestellt.

Das Griffelement 15 ist hierbei in einer nach oben ausgewölbten Ausnehmung 26 an der Oberseite des Batteriefachdeckels 22 angeordnet.

Die Kontaktierungsvorrichtung 10 und somit das mit der Betätigungsfläche 20 versehene Griffelement 15 ist hierbei in dem dargestellten Ausführungsbeispiel derart geneigt angeordnet, dass die Wirklinie 30 der von der Bedienperson auf die Betätigungsfläche 20 ausgeübten Druckkraft, die zum Auseinanderbewegen der Steckerteile 10a, 10b führt, von der Bedienperson ausgehend nach vorne gerichtet und nach unten geneigt geführt ist. Durch eine derartige schräg nach vorne unten orientierte Wirklinie kann die Bedienperson durch Schlagen mit der Faust bzw. durch Drücken mit der flachen Handfläche in einer ergonomischen Armbewegung die beiden Steckerteile 10a, 10b trennen und somit die Notausfunktion betätigen.

Die geneigte Anordnung der Kontaktierungsvorrichtung 10 wird auf einfache Weise durch eine an dem Halter 11 ausgebildete schräge Befestigungsplatte für den feststehenden Steckerteil 10a erzielt.

Die Kontaktierungsvorrichtung 10 kann ebenfalls derart angeordnet werden, dass die Wirklinie der von der Bedienperson auf die Betätigungsfläche 20 ausgeübten Druckkraft von der Bedienperson ausgehend in einer Ausführungsform horizontal gerade nach vorne oder gemäß einer weiteren Ausführungsform nach vorne und nach oben geneigt ist, um durch Ausüben einer Druckkraft auf die Betätigungsfläche 20 die Steckerteile 10a, 10b zu trennnen und die Notausfunktion zu erzielen.

Zudem ist es möglich, die Kontaktierungsvorrichtung 10 derart anzuordnen, dass die Wirklinie der von der Bedienperson auf die Betätigungsfläche 20 ausgeübten Druckkraft vertikal nach unten angeordnet ist, so dass durch Schlagen nach unten auf die Betätigungsfläche 20 die Steckerteile 10a, 10b getrennt und die Notausfunktion erzielt werden kann.

Die erfindungsgemäße Ausbildung der Betätigungsfläche 20 an dem bewegbaren Steckerteil 10b der als Batteriestecker ausgebildeten Kontaktierungsvorrichtung 10 zur Erzielung der Notausfunktion kann bei allen Arten von Flurförderzeug mit einem elektrischen Antriebssystem und einer Energieversorgungseinheit verwendet werden, beispielsweise bei deichselgeführten oder lenkerbedienten Lagertechnikgeräten wie Niederhubwagen, Hochhubwagen, Schlepper sowie Kommissionierem. Zudem kann das erfindungsgemäße Flurförderzeug als Schubstapler, beispielsweise Schubmaststapler, Hochregalstapler oder Regalbediengerät ausgebildet sein. Durch entsprechende Veränderung der geneigten Anordnung der Kontaktierungsvorrichtung 10 kann hierbei die von der Bedienperson ausgeübte Druckkraft auf die Betätigungsfläche 20 an die fahrzeugspezifischen Anforderungen auf einfache. Weise angepasst werden, um entsprechend dem Flurförderzeugtyp eine günstige Ergonomie der Notausfunktion zu erzielen.

## Patentansprüche

1. Flurförderzeug, insbesondere Lagertechnikgerät, mit einer elektrische Energie liefernden Energieversorgungseinheit, insbesondere einem Batterieblock, und einem elektrischen Antriebssystem, wobei eine Kontaktierungsvorrichtung zur elektrischen Verbindung des Antriebssystems mit der Energieversorgungseinheit vorgesehen ist, die einen feststehenden Steckerteil und einen bewegbaren Steckerteil aufweist, und an der Kontaktierungsvorrichtung eine Notausfunktion ausgebildet ist, **dadurch gekennzeichnet, dass** der bewegbare Steckerteil (10b) mit einer von einer Bedienperson betätigbaren Betätigungsfläche (20) versehen ist, wobei bei einer Beaufschlagung der Betätigungsfläche (20) mit einer von der Bedienperson ausgeübten Druckkraft der bewegbare Steckerteil (10b) in Richtung einer Lösestellung betätigbar ist.

2. Flurförderzeug nach Anspruch 1, **dadurch gekennzeichnet, dass** die Kontaktierungsvorrichtung (10) an dem Flurförderzeug derart angeordnet ist, dass die Wirklinie der von der Bedienperson ausgeübten Druckkraft von der Bedienperson weg nach vorne gerichtet ist.

3. Flurförderzeug nach Anspruch 1 oder 2, **dadurch gekennzeichnet, dass** die Kontaktierungsvorrichtung (10) an dem Flurförderzeug derart angeordnet ist, dass die Wirklinie der von der Bedienperson ausgeübten Druckkraft nach unten geneigt oder nach oben geneigt oder horizontal ist.

4. Flurförderzeug nach einem der Ansprüche 1 bis 3, **dadurch gekennzeichnet, dass** die Kontaktierungsvorrichtung (10) an dem Flurförderzeug derart angeordnet ist, dass die Wirklinie der von der Bedienperson ausgeübten Druckkraft vertikal nach unten gerichtet ist.

5. Flurförderzeug nach einem der Ansprüche 1 bis 4, **dadurch gekennzeichnet, dass** die Kontaktierungsvorrichtung (10) an der Oberseite eines Batteriefachs (5) des Flurförderzeugs (1), insbesondere im Bereich des Batteriefachdeckels (22), angeordnet ist.

6. Flurförderzeug nach einem der Ansprüche 1 bis 5, **dadurch gekennzeichnet, dass** die Kontaktierungsvorrichtung (10) zur Bedienperson seitlich versetzt angeordnet ist.

7. Flurförderzeug nach einem der Ansprüche 1 bis 6, **dadurch gekennzeichnet, dass** die Betätigungsfläche (20) an einem mit dem bewegbaren Steckerteil (10b) verbundenen Griffelement (15) ausgebildet ist.

8. Flurförderzeug nach Anspruch 7, **dadurch gekennzeichnet, dass** an dem Griffelement (15) ein Handgriff (21) ausgebildet ist, bei dessen Betätigung die Kontaktierungsvorrichtung (10) in eine Verbindungsstellung betätigbar ist.

9. Flurförderzeug nach Anspruch 7 oder 8, **dadurch gekennzeichnet, dass** das Griffelement (15) in einer an dem Batteriefachdeckel (22) ausgebildeten Ausnehmung (26) angeordnet ist.

## Claims

1. Industrial truck, in particular warehousing device, with a power supply unit providing electrical power, in particular a battery pack, and an electrical drive system, a contact-making apparatus for electrically connecting the drive system to the power supply unit being provided, said contact-making apparatus having a fixed plug part and a movable plug part, and an emergency stop function being formed on the contact-making apparatus, **characterized in that** the movable plug part (10b) is provided with an actuating face (20), which can be actuated by an operator, it being possible for the movable plug part (10b) to be actuated in the direction of a release position in the event of a compressive force exerted by the operator being applied to the actuating face (20).

2. Industrial truck according to Claim 1, **characterized in that** the contact-making apparatus (10) is arranged on the industrial truck in such a way that the line of action of the compressive force exerted by the operator is directed away from the operator towards the front.

3. Industrial truck according to Claim 1 or 2, **characterized in that** the contact-making apparatus (10) is arranged on the industrial truck in such a way that the line of action of the compressive force exerted by the operator is inclined downwards or inclined upwards or is horizontal.

4. Industrial truck according to one of Claims 1 to 3, **characterized in that** the contact-making apparatus (10) is arranged on the industrial truck in such a way that the line of action of the compressive force exerted by the operator is directed vertically downwards.

5. Industrial truck according to one of Claims 1 to 4, **characterized in that** the contact-making apparatus (10) is arranged on the upper side of a battery compartment (5) of the industrial truck (1), in particular in the region of the battery compartment cover (22).

6. Industrial truck according to one of Claims 1 to 5, **characterized in that** the contact-making apparatus (10) is arranged laterally offset with respect to the operator.

7. Industrial truck according to one of Claims 1 to 6, **characterized in that** the actuating face (20) is formed on a grip element (15), which is connected to the movable plug part (10b).

8. Industrial truck according to Claim 7, **characterized in that** a handle (21) is formed on the grip element (15), it being possible for the contact-making apparatus (10) to be actuated so as to move into a connecting position in the event of the activation of said handle.

9. Industrial truck according to Claim 7 or 8, **characterized in that** the grip element (15) is arranged in a cutout (26) formed in the battery compartment cover (22).

## Revendications

1. Chariot de manutention, notamment appareil de la technique de stockage, comprenant une unité d'alimentation en énergie fournissant de l'énergie électrique, notamment un bloc-batterie, et un système d'entraînement électrique, un dispositif de contact pour la connexion électrique du système d'entraînement à l'unité d'alimentation en énergie étant prévu, lequel présente une partie de connecteur fixe et une partie de connecteur mobile, et une fonction de coupure d'urgence étant réalisée sur le dispositif de contact, **caractérisé en ce que** la partie de connecteur mobile (10b) est pourvue d'une surface d'actionnement (20) actionnable par un opérateur, et dans le cas d'une sollicitation de la surface d'actionnement (20) par une force de pression exercée par l'opérateur, la partie de connecteur mobile (10b) peut être actionnée dans la direction d'une position de libération.

2. Chariot de manutention selon la revendication 1, **caractérisé en ce que** le dispositif de contact (10) est disposé sur le chariot de manutention de telle sorte que la ligne d'action de la force de pression exercée par l'opérateur soit orientée à l'écart de l'opérateur vers l'avant.

3. Chariot de manutention selon la revendication 1 ou 2, **caractérisé en ce que** le dispositif de contact (10) est disposé sur le chariot de manutention de telle sorte que la ligne d'action de la force de pression exercée par l'opérateur soit inclinée vers le bas ou vers le haut ou soit horizontale.

4. Chariot de manutention selon l'une quelconque des revendications 1 à 3, **caractérisé en ce que** le dispositif de contact (10) est disposé sur le chariot de manutention de telle sorte que la ligne d'action de la force de pression exercée par l'opérateur soit orientée verticalement vers le bas.

5. Chariot de manutention selon l'une quelconque des revendications 1 à 4, **caractérisé en ce que** le dispositif de contact (10) est disposé sur le côté supérieur d'un compartiment de batterie (5) du chariot de manutention (1), notamment dans la région du couvercle du compartiment de batterie (22).

6. Chariot de manutention selon l'une quelconque des revendications 1 à 5, **caractérisé en ce que** le dispositif de contact (10) est disposé de manière décalée latéralement par rapport à l'opérateur.

7. Chariot de manutention selon l'une quelconque des revendications 1 à 6, **caractérisé en ce que** la surface d'actionnement (20) est réalisée sur un élément de préhension (15) connecté à la partie de connecteur mobile (10b).

8. Chariot de manutention selon la revendication 7, **caractérisé en ce qu'**une poignée (21) est réalisée sur l'élément de préhension (15), et son actionnement permet d'actionner le dispositif de contact (10) dans une position de connexion.

9. Chariot de manutention selon la revendication 7 ou 8, **caractérisé en ce que** l'élément de préhension (15) est disposé dans un logement (26) réalisé sur le couvercle du compartiment de batterie (22).
